(19) Europäisches Patentamt
European Patent Office
Office européen des brevets

(11) **EP 1 084 627 B1**

(12) **EUROPEAN PATENT SPECIFICATION**

(45) Date of publication and mention
of the grant of the patent:
**10.11.2010 Bulletin 2010/45**

(51) Int Cl.:
***A23L 2/08*** (2006.01)

(21) Application number: **00307817.7**

(22) Date of filing: **11.09.2000**

(54) **Method of concentrating tomato juice by reverse osmosis**

Verfahren zur Konzentrierung von Tomatensaft durch Umkehrosmose

Procédé de concentration de jus de tomate par osmose inverse

(84) Designated Contracting States:
**AT BE CH CY DE DK ES FI FR GB GR IE IT LI LU MC NL PT SE**

(30) Priority: **13.09.1999 JP 25837799**

(43) Date of publication of application:
**21.03.2001 Bulletin 2001/12**

(73) Proprietor: **KAGOME KABUSHIKI KAISHA
Nagoya-shi
Aichi-ken (JP)**

(72) Inventor: **Hayakawa, Kiro,
Kagome Kab. Kaisha Sogokenkyusho
Nasu-gun,
Tochigi-ken (JP)**

(74) Representative: **Smyth, Gyles Darren et al
Marks & Clerk LLP
90 Long Acre
London
WC2E 9RA (GB)**

(56) References cited:
**EP-A- 0 404 390      EP-A- 0 904 702**

- **PATENT ABSTRACTS OF JAPAN vol. 1997, no. 02, 28 February 1997 (1997-02-28) & JP 08 280364 A (KAGOME CO LTD), 29 October 1996 (1996-10-29)**
- **PATENT ABSTRACTS OF JAPAN vol. 017, no. 278 (C-1065), 28 May 1993 (1993-05-28) & JP 05 015351 A (KAGOME CO LTD), 26 January 1993 (1993-01-26)**
- **KOSEOGLU S S ET AL: "VEGETABLE JUICES PRODUCED WITH MEMBRANE TECHNOLOGY. PROCESS COMBINING ULTRAFILTRATION AND REVERSE OSMOSIS YIELDS FRESH-TASTING, CLARIFIED JUICES" FOOD TECHNOLOGY, INSTITUTE OF FOOD TECHNOLOGISTS. CHICAGO, US, vol. 45, no. 1, January 1991 (1991-01), pages 124-130, XP000200013 ISSN: 0015-6639**
- **MATSUURA T ET AL: "STUDIES ON REVERSE OSMOSIS FOR CONCENTRATION OF FRUIT JUICES" JOURNAL OF FOOD SCIENCE, XX, XX, vol. 39, no. 4, 1 July 1974 (1974-07-01), pages 704-711, XP000605837**
- **PETROTOS K B ET AL: "Direct osmotic concentration of tomato juice in tubular membrane - module configuration. II. The effect of using clarified tomato juice on the process performance" JOURNAL OF MEMBRANE SCIENCE, ELSEVIER SCIENCE, AMSTERDAM, NL, vol. 160, no. 2, 22 July 1999 (1999-07-22), pages 171-177, XP004170501 ISSN: 0376-7388**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background of the Invention

This invention relates to a method of concentrating tomato juice by reverse osmosis.

Methods based on reverse osmosis are beginning to be considered for concentrating tomato juice, because concentrated tomato juice of a higher quality can be obtained by such methods than by the more commonly practiced method of heating and evaporation. In plants which carry out such concentrations, it is clearly desirable to be able to produce highly concentrated tomato juice reliably and consistently without overloading the reverse osmosis apparatus, at a low production cost, and using a process that can be managed simply. An object of the present invention is to respond to such requirements.

Japanese Patent Abstract 08280364 (JP408280364 A) disclose a method for concentrating tomato juice by feeding (enzyme treated) tomato juice to a (single) tubular-type reverse osmosis membrane, wherein the efficiency of rejecting salt by the membrane is ≥ 90% and wherein the concentration is increased to over 20% Brix.

Brief Description of the Drawings

The accompanying drawings, which are incorporated in and form a part of this specification, illustrate the principles of methods for concentrating tomato juice by reverse osmosis, and also an embodiment of the invention. Together with the description, they serve to explain the principles of the invention. In the drawings:

Fig. 1 is a schematic diagram of an apparatus for concentrating tomato juice by reverse osmosis by a single-stage single-pass method of the type which is employed in the method is according to the present invention;

Fig. 2 is a schematic diagram of an apparatus for concentrating tomato juice by reverse osmosis by a multi-stage single-pass method which is not according to the present invention;

Fig. 3 is a schematic diagram of an apparatus for concentrating tomato juice by reverse osmosis by a multi-stage circulation method which is not according to the present invention; and

Fig. 4 is a graph showing the relationship according to the present invention between the linear speed X at the entrance to the concentration unit and the total length of membrane Y forming the concentration unit when tomato juice is concentrated by a method according to the present invention.

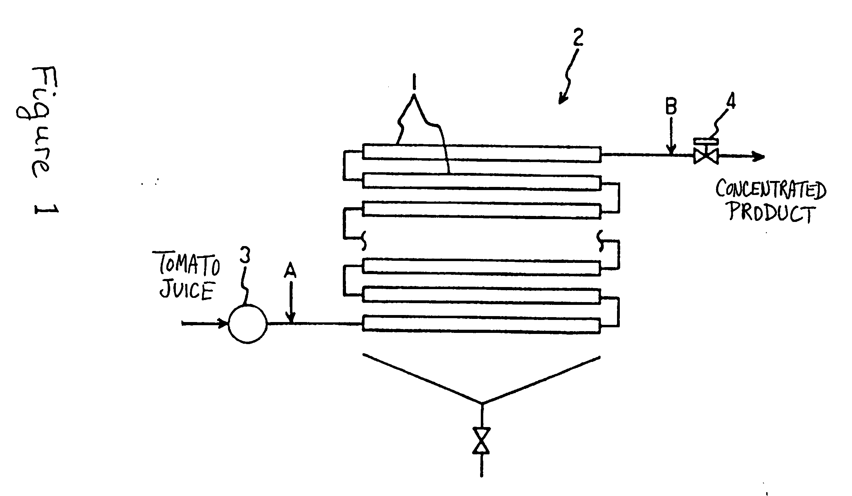

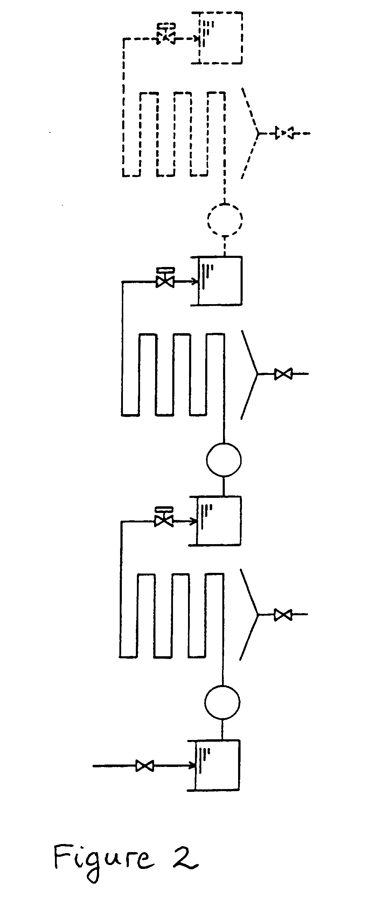

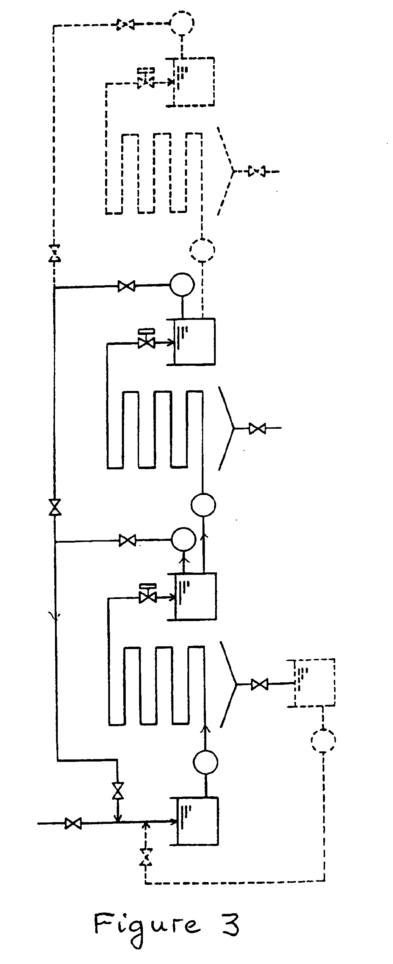

Known methods of concentrating tomato juice by reverse osmosis include single-stage single-pass methods (illustrated schematically in Figure 1), multi-stage single-pass methods (illustrated schematically in Figure 2), and multi-stage circulation methods (illustrated schematically in Figure 3). In the multi-stage methods, units for concentration each having a plurality of tubular membrane modules are arranged in series in two or more stages. In multi-stage single-pass methods, tomato juice is caused to flow through such units in a straight flow, *i.e.* with no recirculation of the juice. In multi-stage circulation methods, tomato juice is caused to flow such units while allowing, at each stage, for recirculation of at least a portion of the juice. Fairly highly concentrated products are obtainable by such multi-stage methods, but the disadvantage of these methods is that the apparatus for the concentration is expensive, and this has an adverse effect upon the cost of production. Moreover, while the process management is cumbersome, bacterial contamination at the connections between the units, and quality degradation, are difficult to avoid. Thus, these methods have generally been considered impractical, and single-stage single-pass methods are more commonly practiced, wherein a concentration unit with a plurality of tubular membrane modules connected in series is provided in only one stage and tomato juice is caused to flow therethrough only once.

On the subject of concentrating tomato juice by reverse osmosis in a single-stage single-pass process, Japanese Patent Publication Tokko 61-48904 disclosed a method for controlling tomato juice in a laminar flow area with Reynold's number less than 3000, its linear speed at 80cm/second or less at the entrance to the concentration unit and the pressure loss at less than 35kg/cm$^2$. Japanese Patent Publication Tokko 59-53824 disclosed another method of controlling the sludge volume of tomato juice at 5% or more and the pressure loss at less than 40kg/cm$^2$. Using either of these methods, however, the apparatus for concentration by reverse osmosis tends to become overloaded occasionally and the problem remains that highly concentrated products cannot be obtained reliably and consistently.

Summary of the Invention

It is therefore an object of the present invention to provide a method of reliably and consistently producing highly concentrated tomato juice by reverse osmosis in a single-stage straight-flow process.

Detailed Description of the Invention

The invention relates to a method of concentrating tomato juice wherein the tomato juice is caused to flow in a straight-flow (that is, without recirculation) under a high pressure through a single-stage concentration unit with a plurality of tubular membrane modules connected in series for reverse osmosis, and **characterised in that** the flow is effected with pressure loss equal to or less than 30kg/cm$^2$ and under a condition that the linear speed (=X in units of cm/s) of the tomato juice entering the concentration unit and the total length (=Y in units of meters) of the membranes of the tubular membrane modules forming the concentration unit satisfy the relationship given below:

$$1.8182X+70 \leq Y \leq -1.0182X+264.4 \qquad \text{Formula (1)}$$

wherein the efficiency of rejecting salt by the tubular membrane modules ("salt rejecting rate") is 90% or greater and wherein concentration is effected to over 20% Brix by reverse osmosis.

Because the method according to the present invention is a single-stage single-pass process, it is possible to avoid an increase in the production cost caused mainly by the high cost of apparatus, as well as the cumbersome process management, which are inevitable consequences of methods based on multi-stage single-pass or multi-stage circulation processes.

The method according to this invention is also **characterized in that** a highly concentrated product with a concentration of 20% Brix or greater is produced. It is clearly desirable to make the concentration in Brix of the obtained product as high as possible, but the optimum concentration in Brix of the concentrated product is found to be about 20% if it is to be avoided to unreasonably overload the apparatus for concentration by reverse osmosis while satisfying the requirements regarding storage and transportation of the concentrated product.

Another characteristic is that the concentration by reverse osmosis is effected with a pressure loss of 30kg/cm$^2$ or less. As a practical matter, the pressure resistance of the tubular membrane modules of the concentration unit is typically about 60-70kg/cm$^2$, but since the osmotic pressure of tomato juice with a concentration of 20% Brix is about 30kg/cm$^2$, the maximum pressure loss for obtaining concentrated tomato juice with concentration of 20% or greater without unreasonably overloading the apparatus becomes about 30-40kg/cm$^2$. On the other hand, if the supply pressure (or the pressure at the inlet to the concentration unit) of the tomato juice is increased to over 60kg/cm$^2$, the effect of concentration polarization (namely the phenomenon of the solute concentration becoming higher near the inner surfaces of the hollow tubular semipermeable membranes comprising the tubular membrane modules) becomes too large. Even if the supply pressure is increased still further, the amount of the liquid which penetrates through these hollow tubular semipermeable membranes ceases to increase appreciably. This means that the concentration by reverse osmosis is preferably carried out at a pressure loss of less than 30kg/cm$^2$ in order to reliably produce tomato juice with a concentration of 20% Brix or more without unreasonably overloading the apparatus for reverse osmosis.

According to the present invention, it is also preferred to use hollow tubular membrane modules with a salt rejecting rate of 90% or greater for the tubular membrane modules comprising the concentration unit of the apparatus for reverse osmosis. If the salt rejecting rate of the material is less than 90%, there is an excessive permeation of the solute, and a concentrated product with the natural quality of tomato juice cannot be obtained. For this reason, it is even more preferable to use tubular membrane modules with salt rejecting rate of over 99%.

According to the present invention, the concentration process by reverse osmosis is carried out such that the linear speed (X in units of cm/s) of the tomato juice at the inlet of the concentration unit and the total membrane length (Y in units of m) of the tubular membrane modules comprising the concentration unit satisfy the relationship given by Formula (1) given above. A high-quality highly concentrated tomato juice of 20% Brix or more can be obtained reliably according to this invention without overloading an apparatus of a practical kind for concentration by reverse osmosis only if tomato juice is caused to flow down in a single-stage single-pass process with pressure loss of 30kg/cm$^2$ or less to a concentration unit formed by connecting tubular membrane modules with salt rejecting rate 90% or over under a condition satisfying Formula (1).

Fig. 1 shows schematically the structure of an apparatus for concentration by reverse osmosis in a single-stage single-pass process. A concentration unit 2 in only one stage formed by connecting a plurality of tubular membrane modules 1 in series is provided. A high-pressure pump 3 is provided on the inlet side of the concentration unit 2 and a pressure control valve 4 is provided on its outlet side. With an apparatus thus structured, tomato juice is supplied through the high-pressure pump 3 into the concentration unit 2 and is caused to flow therethrough in a single-stage single-pass process while the permeated liquid which has passed through the hollow tubular semipermeable membranes of the plurality of tubular membrane modules forming the concentration unit 2 is collected and the correspondingly concentrated product is obtained through the pressure control valve 4. In such a process, the inlet pressure into the concentration unit 2 measured at the position indicated by letter A in Fig. 1, the outlet pressure from the concentration unit 2 measured at the position indicated by letter B in Fig. 1, and hence the pressure loss in the concentration unit 2 obtained as the difference therebetween, and the linear speed X of the tomato juice at the inlet into the concentration unit 2 can be adjusted by controlling the opening of the pressure control valve 4 and the number of rotations of the high-pressure pump 3. The total membrane length Y of the tubular membrane modules 1 can be adjusted by controlling the length of each of the tubular membrane modules comprising the concentration unit 2, as well as the number of the modules that are connected.

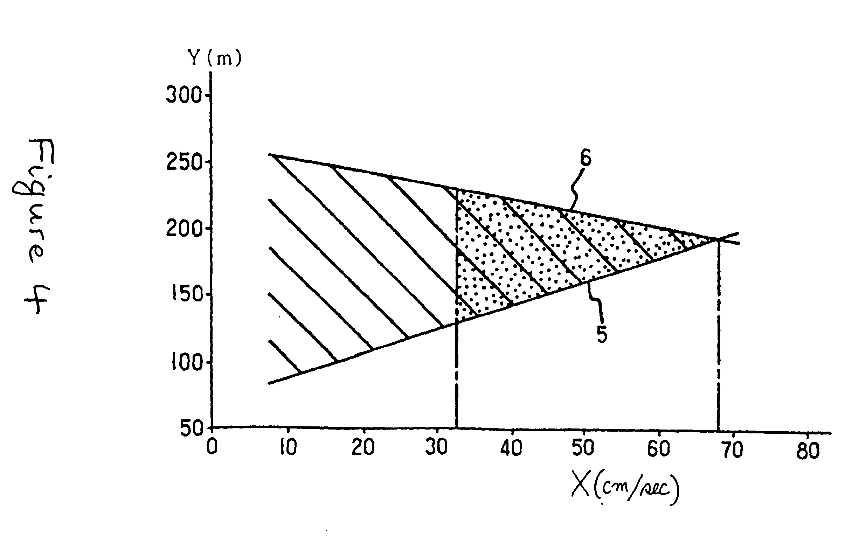

Fig. 4 is a graph showing the relationship between the linear speed X of the tomato juice at the inlet of the concentration unit and the total membrane length Y of the tubular membrane modules comprising the concentration unit when tomato juice at concentration 5% Brix (at 20°C) is caused to flow down in a single-stage single-pass process to the concentration unit comprising tubular membrane modules with a salt rejecting rate of 99%. As will be explained in detail below, numeral 5 indicates a straight line according to the equation $Y = 1.8182X+70$, and numeral 6 indicates a straight line according to the equation $Y = -1.0182X+264.4$, such that the shaded portion bounded by these two lines 5 and 6 represents the area satisfying Formula (1) wherein highly concentrated tomato juice of 20% Brix or more (at 20°C) can be obtained reliably at a pressure loss of 30kg/cm$^2$ or less.

Fig. 4 shows that the upper limit of X for the shaded area is 68.5, but there is no lower limit. In other words, the linear speed of tomato juice at the inlet to the concentration unit may be reduced to nearly zero, but this is not practical. If X is reduced to less than 33, the flow may start to pulsate in the high-pressure pump for supplying the tomato juice to the concentration unit. It is therefore preferred that X be greater than 33. The dotted portion of the shaded area in Fig. 4 indicates this preferred area.

The invention is described next by way of the following four embodiments.

Embodiment (1): A method of obtaining tomato juice with a concentration of 22.0% Brix (at 20°C) by reverse osmosis by causing tomato juice with a concentration of 5% Brix (at 20°C) to flow in a single-pass process through a single-stage concentration unit having a plurality of tubular membrane modules with a salt rejecting rate of 99% connected in series such that the total membrane length Y is 175.0m, the pressure at the inlet is 60kg/cm$^2$, the pressure at the outlet is 44.0kg/cm$^2$ (that is, the pressure loss is 16.0kg/cm$^2$) and the linear speed at the inlet X is 33cm/s.

Embodiment (2): A method of obtaining tomato juice with a concentration of 22.5% Brix (at 20°C) by reverse osmosis by causing tomato juice with a concentration of 5% Brix (at 20°C) to flow in a single-pass process through a single-stage concentration unit having a plurality of tubular membrane modules with a salt rejecting rate of 99% connected in series such that the total membrane length Y is 180.0m, the pressure at the inlet is 60kg/cm$^2$, the pressure at the outlet is 43.0kg/cm$^2$ (that is, the pressure loss is 17.0kg/cm$^2$) and the linear speed at the inlet X is 44cm/s.

Embodiment (3): A method of obtaining tomato juice with a concentration of 21.5% Brix (at 20°C) by reverse osmosis by causing tomato juice with a concentration of 5% Brix (at 20°C) to flow in a single-pass process through a single-stage concentration unit having a plurality of tubular membrane modules with a salt rejecting rate of 99% connected in series such that the total membrane length Y is 190.0m, the pressure at the inlet is 60kg/cm$^2$, the pressure at the outlet is 42.0kg/cm$^2$ (that is, the pressure loss is 18.0kg/cm$^2$) and the linear speed at the inlet X is 55cm/s.

Embodiment (4): A method of obtaining tomato juice with a concentration of 20.7% Brix (at 20°C) by reverse osmosis by causing tomato juice with concentration 5% Brix (at 20°C) to flow in a single-pass process through a single-stage concentration unit having a plurality of tubular membrane modules with a salt rejecting rate of 99% connected in series such that the total membrane length Y is 195.0m, the pressure at the inlet is 60kg/cm$^2$, the pressure at the outlet is 40.7kg/cm$^2$ (that is, the pressure loss is 19.3kg/cm$^2$) and the linear speed at the inlet X is 66cm/s.

The invention is described next by way of Examples and Comparison Examples, but it is emphasised that these Examples are provided in order to further illustrate the invention, and in no way to limit its scope.

In Example 1, tomato juice with a concentration of 20.5% Brix (at 20°C) was obtained by reverse osmosis by causing tomato juice with a concentration of 5% Brix (at 20°C) to flow in a single-pass process through a single- stage concentration unit having a plurality of tubular membrane modules with a salt rejecting rate of 99% connected in series such that the total membrane length Y was 130.0m, the pressure at the inlet Pi was 60kg/cm$^2$, the pressure at the outlet Po was 47.6kg/cm$^2$ (that is, the pressure loss $\Delta$P was 12.4kg/cm$^2$), and the linear speed at the inlet X was 33cm/s.

Examples 2-12 and Comparison Examples 1-8 were obtained similarly but under different conditions as shown in Tables 1 and 2. Their concentrations (Brix) are also shown.

In Tables 1 and 2, the relationship indicated by the straight line 5 of Fig. 4 is obtained from Examples 1-4, the relationship indicated by the straight line 6 of Fig. 4 is obtained from Examples 5-8, and Examples 9-12 are in the dotted area between the straight lines 5 and 6 of Fig. 4. Comparison Examples 1-4 are below the lower straight line 5 of Fig. 4, and Comparison Examples 5-8 are above the upper straight line 6 of Fig. 4.

Tables 1 and 2 clearly show that highly concentrated products of 20% Brix or more can be reliably obtained by reverse osmosis in a single-stage single-pass process according to the method of this invention without unreasonably overloading a practically used apparatus.

Table 1

| | X | Y | Pi | Po | ΔP | Brix |
|---|---|---|---|---|---|---|
| | (cm/sec) | (m) | (kg/cm$^2$) | (kg/cm$^2$) | (kg/cm$^2$) | (%) |
| Test Examples | | | | | | |
| 1 | 33 | 130.0 | 60.0 | 47.6 | 12.4 | 20.5 |
| 2 | 44 | 150.0 | 60.0 | 45.6 | 14.4 | 20.7 |
| 3 | 55 | 170.0 | 60.0 | 39.1 | 20.9 | 21.1 |
| 4 | 66 | 190.0 | 60.0 | 41.0 | 19.0 | 20.5 |
| 5 | 33 | 230.8 | 60.0 | 39.8 | 20.2 | 20.5 |
| 6 | 44 | 219.6 | 60.0 | 39.3 | 20.7 | 20.5 |
| 7 | 55 | 208.4 | 60.0 | 35.8 | 24.2 | 20.9 |
| 8 | 66 | 197.2 | 60.0 | 40.4 | 19.6 | 20.9 |
| 9 | 33 | 175.0 | 60.0 | 44.0 | 16.0 | 22.0 |
| 10 | 44 | 180.0 | 60.0 | 43.0 | 17.0 | 22.5 |
| 11 | 55 | 190.0 | 60.0 | 42.0 | 18.0 | 21.5 |
| 12 | 66 | 195.0 | 60.0 | 40.7 | 19.3 | 20.7 |

Table 2

| | X | Y | Pi | Po | ΔP | Brix |
|---|---|---|---|---|---|---|
| | (cm/sec) | (m) | (kg/cm$^2$) | (kg/cm$^2$) | (kg/cm$^2$) | (%) |
| Comparison Examples | | | | | | |
| 1 | 33 | 100.0 | 60.0 | 52.0 | 8.0 | 18.0 |
| 2 | 44 | 130.0 | 60.0 | 49.0 | 11.0 | 18.2 |
| 3 | 55 | 150.0 | 60.0 | 45.0 | 15.0 | 18.5 |
| 4 | 66 | 170.0 | 60.0 | 43.0 | 17.0 | 19.0 |
| 5 | 33 | 250.0 | 60.0 | 39.8 | 20.2 | 18.0 |
| 6 | 44 | 240.0 | 60.0 | 36.0 | 24.0 | 18.5 |
| 7 | 55 | 230.0 | 60.0 | 35.0 | 25.0 | 18.0 |
| 8 | 66 | 210.0 | 60.0 | 33.0 | 27.0 | 17.5 |

**Claims**

1. A method of concentrating tomato juice, said method comprising the steps of:

   causing tomato juice to flow under high pressure in a straight flow through a single-stage concentration unit having an inlet, an outlet and a plurality of tubular membrane modules connected in series; and
   concentrating said tomato juice by reverse osmosis to over 20% Brix;
   wherein the pressure loss inside said unit is 30kg/cm$^2$ or less, the linear speed X in units of cm/second of said tomato juice at said inlet and total membrane length Y in units of meters of said tubular membrane modules satisfy the Formula:

$$1.8182X+70 \leq Y \leq -1.0182X+264.4,$$

   and said tubular membrane modules have a salt rejecting rate of 90% or above.

2. A method according to claim 1, wherein X is greater than 33.

3. A method according to claim 1 or claim 2, wherein the salt rejecting rate of said tubular membrane modules is greater than 99%.

**Patentansprüche**

1. Verfahren zur Konzentrierung von Tomatensaft, wobei das Verfahren die folgenden Schritte umfasst:

   Bewirken, dass der Tomatensaft unter Hochdruck in einer direkten Strömung durch eine einstufige Konzentrationseinheit mit einem Eingang, einem Ausgang und einer Mehrzahl von rohrförmigen Membranmodulen, die in Serie verbunden sind; und
   Konzentrieren des Tomatensaftes durch umgekehrte Osmose auf mehr als 20% Brix;
   wobei der Druckverlust innerhalb der Einheit 30kg/cm$^2$ oder weniger beträgt, wobei die geradlinige Geschwindigkeit X in Einheiten von cm/Sekunde des Tomatensaftes am Eingang und die Membrangesamtlänge Y in Einheiten von Metern der rohrförmigen Membranmodulen der folgenden Formel entsprechen:

$$1,8182X+70 \leq Y \leq -1,0182X+264,4,$$

   und die rohrförmigen Membranmodule eine Salz-Zurückweisungsrate von 90% oder mehr aufweist.

2. Verfahren nach Anspruch 1, wobei X größer ist als 33.

3. Verfahren nach Anspruch 1 oder Anspruch 2, wobei die Salz-Zurückweisungsrate der rohrförmigen Membranmodule größer ist als 99%.


**Revendications**

1. Procédé pour concentrer du jus de tomate, ledit procédé comprenant les étapes suivantes:

   faire couler le jus de tomate sous haute pression dans un flux direct à travers une unité de concentration à une seule étape ayant une entrée, une sortie et une pluralité de modules de membrane tubulaires connectés en série; et
   concentrer ledit jus de tomate par osmose inverse jusqu'à 20% Brix;
   où la perte de pression à l'intérieur de ladite unité est de 30kg/cm$^2$ ou moins, la vitesse linéaire X en unités de cm/seconde dudit jus de tomate à ladite entrée et la longueur de membrane totale Y en unités de mètres desdits modules de membrane tubulaire satisfont la formule:

$$1,8182X+70 \leq Y \leq -1,0182X+264,4,$$

   et lesdits modules de membrane tubulaire ont un taux de rejet de sel de 90% ou plus.

2. Procédé selon la revendication 1, dans lequel X est supérieur à 33.

3. Procédé selon la revendication 1 ou 2, dans lequel le taux de rejet de sel desdits modules de membrane tubulaire est supérieur à 99%.

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 08280364 B
- JP 408280364 A
- JP TOKKO6148904 B
- JP TOKKO5953824 B